## Europäisches Patentamt
## European Patent Office
## Office européen des brevets

(19)

(11) Publication number: **0 029 914**
**B1**

(12) **EUROPEAN PATENT SPECIFICATION**

(45) Date of publication of patent specification: **21.09.83**

(51) Int. Cl.³: **G 02 B 1/12, G 02 B 5/22, G 02 B 5/26**

(21) Application number: **80106479.1**

(22) Date of filing: **23.10.80**

(54) **Method of decreasing the optical reflectiveness of surfaces.**

(30) Priority: **05.11.79 US 91299**

(43) Date of publication of application:
**10.06.81 Bulletin 81/23**

(45) Publication of the grant of the patent:
**21.09.83 Bulletin 83/38**

(84) Designated Contracting States:
**DE FR GB**

(56) References cited:
**GB - A - 1 561 784
US - A - 3 673 017
US - A - 3 811 999
US - A - 4 013 465
US - A - 4 153 654**

**APPLIED OPTICS, vol. 19, September 1980,
New York US E. SPILLER et al.: "Graded-index
AR surfaces produced by ion implantation on
plastic materials"
APPLIED PHYSICS LETTERS, vol. 26, 15 May
1975, New York US J. J. CUOMO et al.: "A new
concept for solar energy thermal conversion",
page 557**

(73) Proprietor: **International Business Machines Corporation
Old Orchard Road
Armonk, N.Y. 10504 (US)**

(72) Inventor: **Baglin, John Edward Eric
1673 Morningview Drive
Yorktown Heights, N.Y. 10598 (US)**
Inventor: **Feder, Ralph
River Road
Hyde Park, New York 12538 (US)**
Inventor: **Haller, Ivan
901 Hardscrabble Road
Chappaqua, New York 10514 (US)**
Inventor: **Hammer, William Noel
14 Knollcrest Crive
Brookfield Center Connecticut 06805 (US)**
Inventor: **Spiller, Eberhard
Lakeside Road
Mt. Kisco, New York 10549 (US)**

(74) Representative: **Ahlman, Bertel
IBM Svenska AB Box 962
S-18 109 Lidingö (SE)**

The present invention relates to methods for producing antireflecting surfaces. More particularly, the present invention relates to a method for increasing the optical absorptivity of a surface of a material to a predetermined band of electromagnetic radiation and further to a method for increasing the transmission of light through a transparent material.

Antireflecting surfaces are currently available. Commercially available antireflecting surfaces are generally fabricated by vacuum deposition of thin homogeneous films. These films find limited application since the deposition techniques may be complex and adhesion to materials such as plastics is frequently not satisfactory.

Alternatively antireflecting surfaces have been prepared on glasses by phase separation of the glass and subsequently etching of one of the phases to produce a graded index (see U.S. Patent 4,091,884). While this technique provides an antireflecting surface it may only be employed for a limited class of glasses which phase separate.

Another approach for producing antireflecting surfaces is to make an inhomogeneous transition layer on the surface. Ideally the optical properties in this layer change continuously from those of the substrate to those of the medium through which the incident light is travelling. These changes occur over a layer, the optical thickness of which is more than 1/2 the wavelength of the incident light. This transition layer may contain a distribution of very fine particles which tend to absorb the major portion of the non-normal light impinging on the surface. The Negishi et al patent, U.S. Patent 4,004,851, teaches one method for reducing external reflection from a surface by employing coating techniques. While their technique and other related techniques will produce antireflecting surfaces the particles must be well dispersed in the medium coating the surface, and for optimal efficiency must be very small (i.e., one fifth the wavelength of the visible light dispersed in the medium).

Furthermore, since no known solid has a refractive index lower than 1.3, any smooth surface treated by this method will have a residual reflectivity, when in contact with air, of at least 1.7%.

Finally a coating material must be found which is compatible with the surface being coated. This can create problems when a lens is coated since the coating must wet the surface so that there are no interference effects, but the coating cannot attack the surface so as to distort it.

Some of the problems associated with creating antireflecting surfaces by employing coatings have in part been solved by the method of Clapham et al in U.S. Patent 4,013,465. They teach a method of producing a surface having reduced reflectance to electromagnetic radiation in a predetermined wavelength band by creating a regular array of protuberances on the surface. The protuberances are created by coating the surface with a photoresist, selectively exposing the regions of the photoresist, and developing the photoresist to produce a regular array of protuberances. The patent goes on to teach that if the protuberances are sought in the material itself rather than in the photoresist coating, ion beam erosion may be employed to penetrate through the thinned regions of the photoresist and introduce the protuberances into the underlying surface. The techniques of Clapham et al whether employed with or without ion beam etching will result in a periodic array of protuberances all of uniform height. Such an array at best will produce a quadratic variation of the solid material removed as one approaches the free surface, therefore, at best one can expect a quadratic variation in the graded index and furthermore since the resulting structure is periodic the antireflecting characteristics of the graded index will be strongly wavelength dependent.

Ion beam treatment of surfaces has also been employed to create holes with controlled taper. Peterson in U.S. Patent 3,673,017 discloses that holes may be made in materials which have been exposed to ion radiation by etching the material with an etchant that will preferentially attack the damaged material along the ion tracks.

Bean et al in U.S. Patent 3,770,532 discloses a method for making a porous body which employs ion track etching.

Fleischer et al in U.S. Patent 3,811,999 is another of the numerous patents on the subject of particle track etching. This patent discloses that in very thick samples (e.g., 8 microns) it is possible to generate a surface with a number of recesses by irradiating the surface so as to establish an ion track density of approximately $10^5$ per $cm^2$ and thereafter etch to form cylindrical recesses in the surface.

While the Peterson, Bean et al, and Fleischer et al patents teach methods for ion beam treatments of surfaces which alter the surface characteristics, these patents neither singularly nor collectively offer any teachings which would enable one to make a graded index antireflecting surface. Thus, the prior art would indicate that in order to produce antireflecting surfaces one must either coat the surface with an appropriate antireflecting film, or alternatively employ a photoresist material which is subsequently developed to produce an array of periodic protuberances. Neither of these techniques is totally satisfactory for the reasons set forth above.

The invention as claimed is intended to overcome these problems of the prior art.

The present invention relates to a method for increasing the optical absorptivity of a surface by exposing the surface to a flux of ions. The exposure should be sufficient to introduce ion tracks wherein the track to track separation is distributed randomly and having a density of greater than $10^8/cm^2$. These tracks extend into the surface but do not pass therethrough. The exposed surface is then contacted with an etchant which attacks the tracks causing conical etch pits to develop. The etching process is continued until an array of protuberances is formed having a gaussian-like distribution in the heights. The protuberances have a mean height of not less than $1/2 \lambda_n$, where $\lambda_n$ is the maximum wavelength of the light to be absorbed.

The present invention relates also to a method for increasing the transmission of light through a body of transparent material by exposing parallel surfaces of the body to a flux of ions. This exposure should be sufficient to introduce ion tracks into the surfaces having a density of at least $10^9/cm^2$ wherein the track to track separation is distributed randomly. The exposed surfaces are then contacted with an etchant attacking the tracks. The etching process is continued until an array of protuberances are developed having a height not less than $1/2 \lambda_n$, where $\lambda_n$ is the maximum wavelength of the light to be transmitted through the body.

On the other hand if the material is non-transparent to the light impinging on it then the surface will be made more strongly absorbing by the above described treatment.

Alternatively, a strongly absorbing surface may be produced in transparent materials by depositing a layer of opaque material onto the treated surface thus rendering the surface strongly absorbing.

One advantage of the invention is that an antireflecting surface is provided which will be wavelength independent over a broad wavelength spectrum.

Another advantage offered by the invention is that an antireflecting surface is provided without complicated production steps.

Still another advantage of the invention is that a highly absorptive surface is provided.

Yet another advantage of the invention is that a method is provided for making an antireflective surface on plastic lenses.

Still another advantage of this invention is that a rapid, efficient, and inexpensive method is provided for making antireflecting surfaces.

These and other advantages of the invention will become apparent from the following description and accompanying drawings, in which:

Fig. 1 is a schematic representation of an antireflective surface produced by the method of the present invention.

Fig. 2 is an electron micrograph of an antireflective surface produced on bisphenol-A polycarbonate (Lexan) by irradiation with carbon ions.

Fig. 3 is a graphical representation of the computed dependence of reflectance on $h_m/\lambda_n$, the ratio of the height of protuberances to the wavelength $\lambda_n$ within the transition layer. The curves refer to (A) a regularly spaced array of protuberances with the change in n proportional to nd and for, (B) a statistical distribution in the spacing of the protuberances in an array.

Fig. 4 is a graphical representation of measured reflectivity, R, and increased transmission as observed in a bisphenol-A polycarbonate (Lexan) window.

Fig. 5 is a graphical representation measuring the change in transmission in percent of incident light compared to an untreated plate, for different development times for polyethylene terephthalate (Mylar) plates exposed to 2 MeV carbon ions.

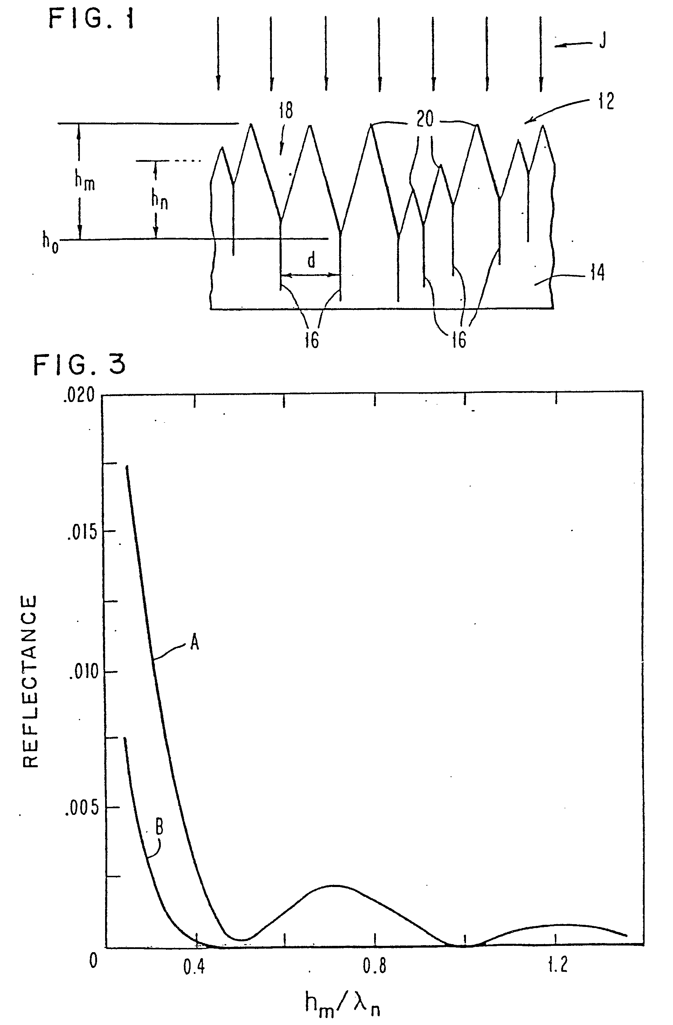

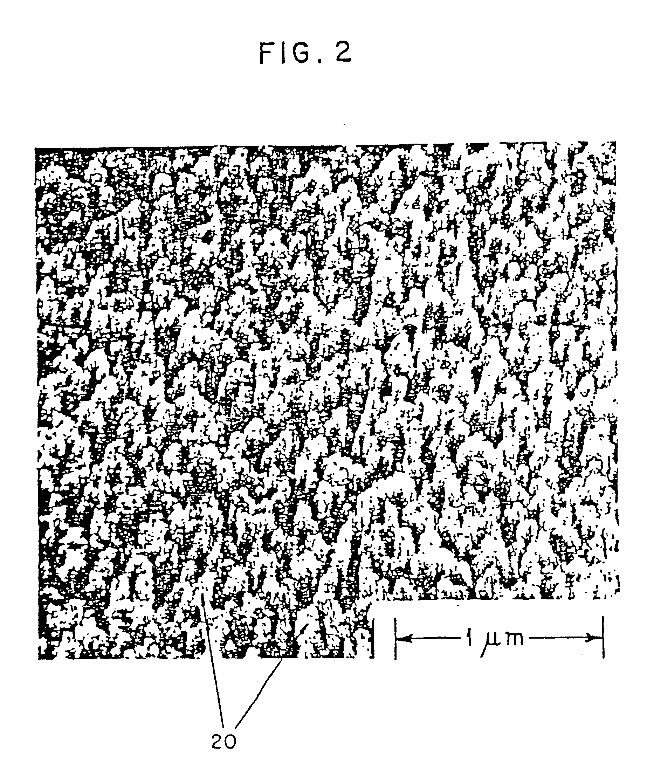

Fig. 1 is a schematic representation of an antireflecting surface produced by the method of the present invention. An antireflecting surface 12 can be produced on a substrate 14 by exposing the substrate 14 to an ion flux J. The ions from the flux J introduce ion tracks 16 into the substrate 14. Preferably the flux density and the exposure time are adjusted so that a track density of at least approximately $10^8$ per square centimeter results. These tracks 16 extend into the substrate 14, but do not pass therethrough. Due to the character of the ion flux the track to track separation distance d will be variable and will be distributed in a statistical manner.

The type of ion and the energy of the ions are selected such that the track length is larger than the thickness of the desired transition layer and the energy deposition in the tracks is in the range between 200 and 10,000 KeV/$\mu$m. Table I lists track length and energy deposition for some typical ions.

TABLE I

| | Mean range ($\mu$m) | Initial energy loss KeV/$\mu$m |
|---|---|---|
| He | 5.5 | 280 |
| B | 1.9 | 1060 |
| C | 1.7 | 1370 |
| N | 1.6 | 1680 |
| O | 1.6 | 2000 |
| Ne | 1.5 | 2630 |
| Ar | 1.2 | 4830 |

Mean range and energy loss of ions of 2 MeV energy in carbon of density 2.25.

The exposed substrate 14 is then contacted with an etchant which preferentially attacks the ion tracks 16 and develops the antireflecting surface 12. When the substrate 14 is an organic polymer such as a polycarbonate or polyester an appropriate etchant is a strong base such as sodium hydroxide. The etching process will cause preferential attack of the ion tracks 16 and result in conical etchpits 18. The etching should be continued for a time sufficient to allow initially formed conical pits 18 to overlap as is illustrated in Fig. 1. Since the separation spacing d between the ion tracks 16 varies in a statistical manner, the resulting surface will be an array of protuberances 20 of varying heights. The mean height of these protuberances, $h_n$, should not be less than $1/2\ \lambda_n$, where $\lambda_n$ is the shortest wavelength of the incident light in the transition layer. The surface heretofore described may also be characterized as a graded surface wherein the lower extremity $h_o$ is 100% solid and further wherein the upper surface $h_m$ is 0% solid with the fraction solid therebetween varying with depth in a gaussian-like manner.

Fig. 2 shows an electron micrograph of an antireflecting surface produced by the method described above on bisphenol-A polycarbonate by irradiation with a flux of carbon ions. As can be deduced from examination of the micrograph, the antireflecting surface can be described as a random array of conical protuberances 20 whose separation varies in a statistical manner. The surface produced by this method is quite distinct from that produced by the method of the Clapham patent (U.S. Patent No. 4,013,465). The aperiodic interprotuberance separation results in a substantial increase in the nonreflective characteristic of the surface. The improvement that results from practicing the method of the present invention is illustrated in Fig. 3, which gives a graphical representation of the reflectance as a function of wavelength for the present invention, as well as, for that of the method described in U.S. Patent No. 4,013,465. Curve A is the computed dependence of the reflectance of a surface which has a periodic array of protuberances which produce a linear transition layer between the solid and the medium above it. As can be seen from examination of this curve, the reflectance characteristic of the surface produced by the method of U.S. Patent No. 4,013,465 will be a function of the wavelength of the radiation impinging upon it. Curve B is the computed dependence of reflectance on wavelength for a surface produced by the method of the present invention. By comparing curves A and B of Fig. 3, one can see that the non-reflecting character of the surface is enhanced by employing protuberances with gaussian-like distribution of their separations.

A statistical distribution in spacing producing a nearly gaussian transition layer has a further advantage in that it is not strongly wavelength dependent.

The method of the present invention may be applied to transparent materials producing antireflecting surfaces which will increase the transmitted component of the light. For cases where highly transmissive surfaces are sought, it is preferable to have the protuberance spacing much less than $\lambda_n$, corresponding to an ion track density of greater than

$$\frac{1}{\lambda_n^2}.$$

If the material of the substrate 14 is non transparent to the light impinging on it, then generating the antireflecting surface 12 thereon will render the material more strongly absorbing. In the case where only a highly absorptive surface is sought, the track density can be reduced below the value quoted above, provided that the mean height of the protuberances is maintained at greater than $1/2\ \lambda_n$. Alternatively, a strongly absorbing surface 12 can be produced in transparent materials by depositing a layer of an opaque material, such as a metal, onto the surface 12, thus rendering the surface strongly absorbing.

In order to further one's understanding of the present inventive concept, the following specific examples of the invention are given. These examples are by way of illustration and not by way of limitation.

Example I

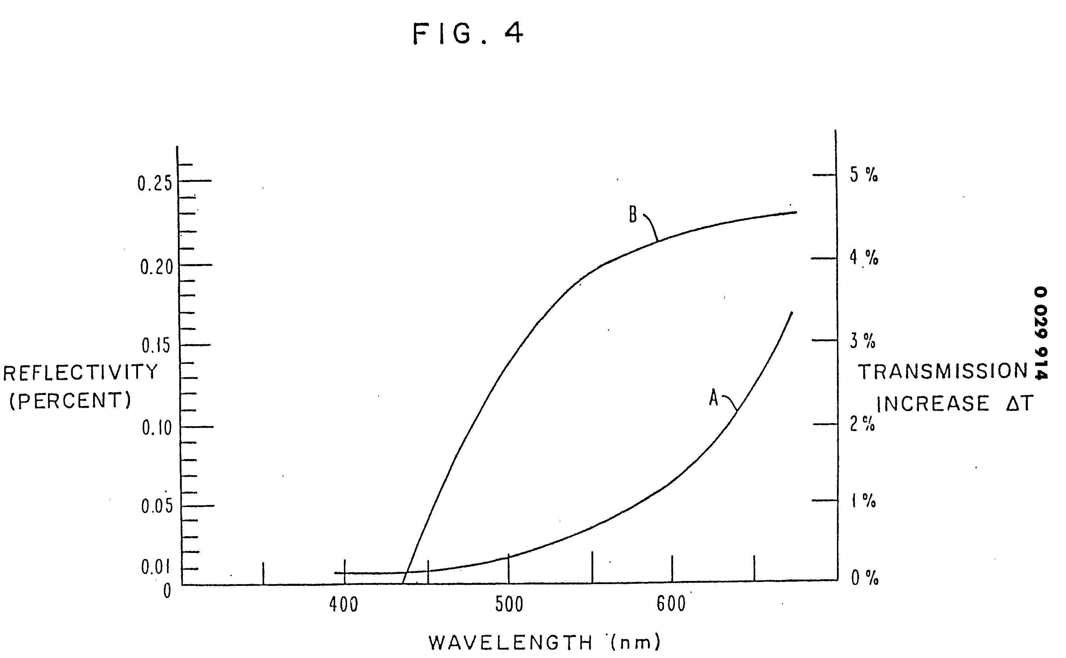

Plates of bisphenol-A polycarbonate (Lexan) 5.6 cm×5.6 cm×0.3 cm thick were irradiated on both surfaces with carbon ions. The ions were accelerated to 2 MeV and the exposure dosage per side of the plate was $4\times10^{11}$ cm$^{-2}$. After the plates were exposed, they were immersed in a solution of sodium hydroxide. A 6N solution of sodium hydroxide was employed and the plate was etched for 4 minutes while maintaining the solution at 60°C. After etching, the plate was washed in deionized water and dried. Visually, the surfaces had a glare-free appearance, and were also virtually free of haze. The reflectivity of the surface was measured and is reported in Fig. 4 by curve A. From examination of the figure it can be seen that the percent reflectivity was generally less than 0.02% in the 400 to 600 nanometers wavelength range and increased to only about 0.25% in the wavelength range of 600 to 700 nanometers.

Since Lexan is transparent to a large portion of the visible spectrum, the antiglare characteristic of the surface increases the transmission of light through the Lexan plate. The $\Delta T$ observed for the plate is plotted in Fig. 4 by curve B. The decrease in transmission for the blue light (i.e., wavelength less than about 500 nanometers) is due to the scattering of these wavelengths in the transition layer.

Example 2

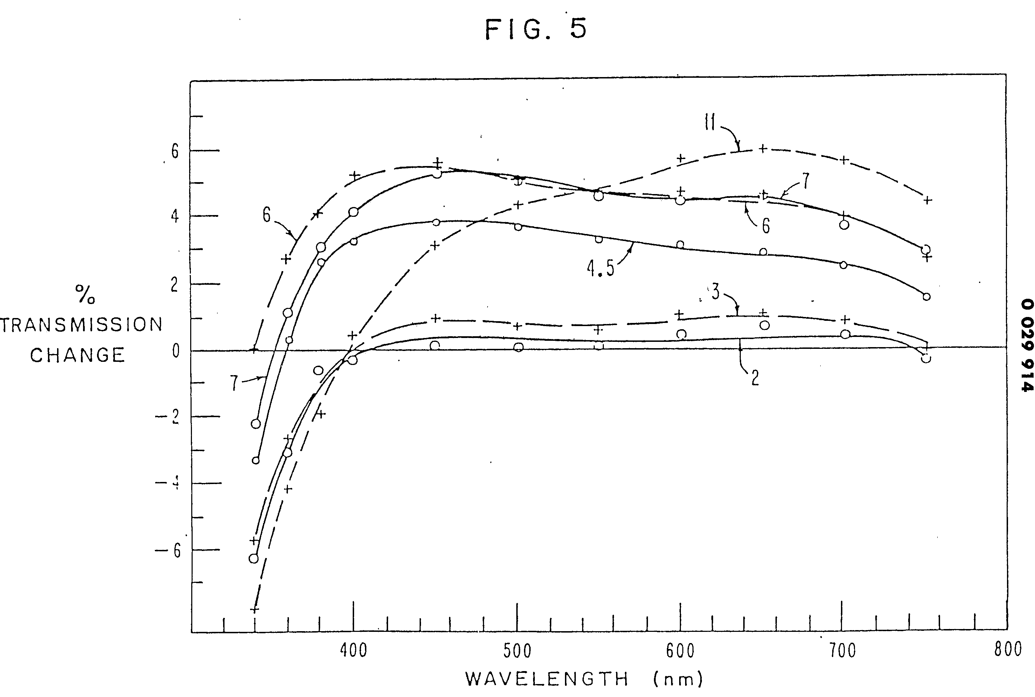

Both surfaces of a sheet of polyethylene terephthalate (Mylar 5.6 cm× 5.6 cm by 75 $\mu$m thick were irradiated by carbon ions. The carbon ion energy was 2 MeV and the dosage was $5.6\times10^{11}$ ions per cm$^2$. Strips were cut from the irradiated sheet and developed in a 6N sodium hydroxide solution at 35°C. The time for development was varied systematically between 2 and 11 minutes. The change in the percent transmission of the sheet as compared to an unexposed and undeveloped reference sheet is shown as a function of the wavelength of light in Fig. 5. As can be seen from Fig. 5 for the above etching conditions, development times less than about 4.5 minutes do not substantially increase the transmitted light. This fact would indicate that there is only a small decrease in the reflectivity of the surfaces. Development times of 4.5 minutes and longer resulted in substantial gains in the transmission regardless of the precise wavelength of light used for testing. It was observed, however, that for ultraviolet light (i.e., $\lambda$ less than 360 nanometers) there is an upper limit of the development time for an increase in transmission. This can be seen by observing the 11 minute development time curve and noting the fall-off in the transmission at the shorter wavelengths. This fall-off is due to scattering because overdevelopment produced coarser structures.

It will be clear to one skilled in the art that the temperature and concentration of the development solution will influence the optimal development time. This is further illustrated in the following example.

Example 3

The experiment of Example I was repeated with the exception that the 6N sodium hydroxide solution was maintained at 44°C. Development times for plates treated in this manner were 6 to 10 minutes as compared with the times for plates developed at 60°C where a developing time of 3 to 6 minutes was required.

Example 4

Polycarbonate plates as used in Example 1, were exposed to 2 MeV carbon ions at various dosage levels before development. The development procedure was, as set forth in Example 1. It was found that $2 \times 10^{12}$ ions per cm$^2$ produced antireflecting surfaces which were similar in properties to Example 1. However, when the ion dosage was reduced to $10^9$ ions per cm$^2$ the resulting surfaces appeared to be hazy, irrespective of the development time and/or temperature. The haziness in the surface of these latter samples can be accounted for on the basis of the scattering of the light, and while the latter surface may be an effective absorbing surface, its antiglare properties will be inferior and thus it is desirable to have ion dosages of greater than $10^{10}$ ions per cm$^2$ to ensure that the surface will be an effective antireflective surface with the corresponding increase in transmission.

Example 5

The polycarbonate plates exposed to dosages of $10^9$ ion per cm$^2$ as discussed in Example 4, were further treated by evaporating, in vacuum, about 50 nanometers of aluminum onto the surface. These surfaces appeared black, and to the naked eye were indistinguishable from aluminized surfaces which had been deposited on samples which had been exposed to higher ion dosages. This observation indicates that the surfaces are highly absorptive.

Example 6

Polycarbonate plates were exposed to ion dosages of between $4 \times 10^{11}$ and $7 \times 10^{11}$ ions per cm$^2$ with 1 MeV helium, 2 MeV carbon, and 2 MeV argon ions. These samples were developed in accordance with Example 1 and the resulting surfaces were examined. Excellent antireflective properties were observed for the surfaces exposed to argon and carbon ions, but only a slight decrease in reflectivity of the surface was observed for the helium exposed plates. Nonreflecting surfaces can be obtained with He ions with prolonged development times. However, the resulting surfaces scatter strongly and are not suitable for high transmission windows. Examination of the profile of the surface was accomplished by coating the resulting surface with about 25 nanometers of a tungsten rhenium alloy. These surfaces were then observed by a scanning electron microscope. The resulting structures had a very high aspect ratio (e.g., depth to width ratio) for both the argon and carbon exposed plates, and a lower aspect ratio for the helium exposed plate. The electron micrograph for the carbon exposed surface is shown in Fig. 2.

Example 7

A solution of bisphenol-A polycarbonate in pyridine, 10 percent weight per volume, was centrifugally spun onto a fused silica disc. A spinning speed of 600 rpm produced a film thickness of about 3 micrometers. The film was subsequently exposed to an ion flux as described in Example 1. This produced a surface with substantially lower reflectivity than the original quartz surface.

Industrial applicability

Ths surfaces prepared by the present invention are well suited to a variety of industrial applications, especially when the surfaces can be protected from mechanical abrasion. Particularly likely applications would be optics and industrial covers. For optics the method would be particularly applicable to the production of antiglare plastic lenses. Furthermore for lens systems, coating of only the inner surfaces will effectively eliminate ghosts resulting from interlens reflections. These lens systems could be produced without requiring a deposit of a layer onto the first surface of the system. This would substantially simplify lens production and would eliminate the necessity of finding a coating material which is compatible with the plastic lens.

For industrial covers the present invention would be very useful for making transparent covers which are less reflective. In photolithographic fabrication of electronic circuits, masks are kept dust-free by transparent covers located outside the depth of focus. These covers could be improved if the surfaces could be made less reflective. The present invention offers a method of producing such dust covers.

Light sensors frequently have a protective covering over the active surface. The present invention offers a way of improving the transmission through these protective surfaces thereby increasing the efficiency of the light sensors.

The nonreflecting surfaces made by this process may also find use in the liquid crystal display technology.

When the present invention is employed to treat thermally absorbing surfaces, the efficiency of the surface will be increased for this absorption of light of wavelengths shorter than twice the mean height of the protuberances created. This could be advantageously applied to photothermal solar energy converters. It will be obvious to those skilled in the art that by the proper selection of processing parameters controlling the height and the shape of the protuberances, the absorbing surface will be both spectrally and directionally selective.

## Claims

1. A method for increasing the optical absorptivity of a surface of a material to a predetermined band of electromagnetic radiation characterized by exposing the surface (12) to a flux of ions (J) which introduces ion tracks (16) into the surface wherein the track to track separation (d) is distributed in a random manner, said track density being greater than $10^8/cm^2$, and contacting the exposed surface with an etchant which attacks said ion tracks for a time sufficient to develop an array of protuberances (20) having a gaussian-like distribution in the heights (h), and a mean height $(h_n)$ not less than $1/2 \lambda_n$, where $\lambda_n$ is the maximum wavelength of the light to be absorbed.

2. The method of claim 1 wherein said surface (12) is rendered strongly absorptive by employing a material which is itself absorptive to the radiation.

3. The method of claim 1 wherein said surface (12) is rendered strongly absorptive by depositing a metal film onto the array of conical protuberances in an otherwise transparent material.

4. A method of claim 1 for producing an antiglare surface wherein the exposing of the surface (12) to the flux of ions provides a density of ion tracks (16) of at least $10^9/cm^2$.

5. The method of claim 4 wherein the surface material is selected from the group of organic polymers consisting of polycarbonates and polyesters and said etchant is a base.

6. The method of claim 5 wherein said organic polymer is from the group of polymers, consisting of bisphenol-A polycarbonate and polyethylene terephthalate, and said etchant is a 6 N solution of NaOH.

7. The method of claim 4 wherein said tracks (16) extend into the surface (14) but do not pass therethrough.

8. A method for increasing the transmission of light through a body of transparent material characterized by exposing parallel surfaces of said body to a flux of ions which introduce ion tracks (16) into said surfaces to provide a track density of at least $10^9/cm^2$ wherein the track to track separation (d) is distributed in a random manner, contacting the surfaces with an etchant which attacks the tracks for a time sufficient to develop an array of protuberances (20) having a height not less than $1/2 \lambda_n$, where $\lambda_n$ is the maximum wavelength of the light to be transmitted through the material via said surfaces.

## Patentansprüche

1. Verfahren zur Erhöhung der optischen Absorptionsfähigkeit einer Materialoberfläche für ein vorgegebenes Band elektromagnetischer Strahlung, dadurch gekennzeichnet, daß die Oberfläche (12) einem Ionenfluß (J) ausgesetzt wird und dadurch Ionenspuren (16) mit einem beliebig verteilten Abstand (d) der Spuren voneinander in die Oberfläche mit einer Spurendichte von mehr als $10^8/cm^2$ gelegt werden und die dem Ionenfluß ausgesetzte Oberfläche mit einem Ätzmittel in Berührung gebracht wird, welches auf die Ionenspuren lange genug einwirkt, um ein Muster von Protuberanzen (20) mit Gauß'scher Verteilung der Höhen (h) und einer mittleren Höhe $(h_n)$ von wenigstens $1/2.\lambda_n$ zu entwickeln, worin $\lambda_n$ die größte Wellenlänge des zu absorbierenden Lichtes ist.

2. Verfahren nach Anspruch 1, dadurch gekennzeichnet, daß die Oberfläche (12) durch Verwendung eines selbst strahlungsabsorbierenden Materials stark absorbierend gemacht wird.

3. Verfahren nach Anspruch 1, dadurch gekennzeichnet, daß die Oberfläche (12) durch Niederschlagen eines Metallfilmes auf dem Feld konischer Protuberanzen in einem anderweitig transparenten Material stark absorbierend gemacht wird.

4. Verfahren nach Anspruch 1 zur Erzeugung einer entspiegelten Oberfläche, dadurch gekennzeichnet, daß die Oberfläche (12) einem Ionenfluß ausgesetzt wird und dadurch eine Dichte der Ionenspuren (16) von wenigstens $10^9/cm^2$ erreicht wird.

5. Verfahren nach Anspruch 4, dadurch gekennzeichnet, daß das Oberflächenmaterial aus der Gruppe organischer Polymere ausgewählt wird und aus Polycarbonaten und Polyestern besteht und daß das Ätzmittel eine Base ist.

6. Verfahren nach Anspruch 5, dadurch gekennzeichnet, daß das organische Polymer aus der Gruppe der Polymere stammt und aus Bisphenol-A-Polycarbonat und Polyäthylenterephthalat besteht und daß das Ätzmittel eine 6 N Lösung von NaOH ist.

7. Verfahren nach Anspruch 4, dadurch gekennzeichnet, daß die Spuren (16) in die Oberfläche (14) hineinlaufen sie aber nicht durchdringen.

8. Verfahren zur Erhöhung der Lichtübertragung durch einen Körper aus transparentem Material, dadurch gekennzeichnet, daß parallele Flächen des Körpers einem Ionenfluß aussetzt werden, der Ionenspuren (16) in der Oberfläche mit einer Spurdichte von wenigstens $10^9/cm^2$ und einem beliebig verteilten Abstand (d) der Spuren untereinander bedingt, daß die Oberflächen mit einem Ätzmittel in Berührung gebracht werden, welches auf die Spuren lange genug einwirkt, um ein Feld von Protuberanzen (20) mit einer Höhe von wenigstens $1/2\lambda_n$ zu entwickeln, wobei $\lambda_n$ die größte Wellenlänge das durch das Material über die genannten Oberflächen zu übertragenden Lichtes ist.

## Revendications

1. Procédé pour augmenter l'absorptivité optique d'une surface de matériau sur une bande prédéterminée de rayonnement électromagnétique, caractérisé par l'exposition de la surface (12) à un flux de ions (J) qui introduit des pistes ioniques (16) dans la surface où la séparation piste-à-piste (d) est répartie de façon aléatoire, la densité des pistes étant supérieure à $10^8/cm^2$, et par la mise en contact de la surface exposée avec un décapant qui attaque lesdites pistes ioniques pendant un temps suffisant pour développer un ensemble de protubérances (20) ayant une répartition gaussienne dans les hauteurs (h), et une hauteur moyenne $(h_n)$ d'au moins $1/2\lambda_n$, où $\lambda_n$ repré-

sente la longueur d'onde maximale de la lumière à absorber.

2. Procédé selon la revendication 1, dans lequel ladite surface (12) est rendue fortement absorbante en employant un matériau qui est lui-même absorbant au rayonnement.

3. Procédé selon la revendication 1, dans lequel ladite surface (12) est rendue fortement absorbante par dépôt d'un film de métal sur l'ensemble des protubérances coniques qui sont, par ailleurs, faites dans un matériau transparent.

4. Procédé selon la revendication 1 pour produire une surface anti-éblouissante, dans lequel l'exposition de la surface (12) au flux ionique fournit une densité de pistes ioniques (16) d'au moins $10^9/cm^2$.

5. Procédé selon la revendication 4, dans lequel le matériau de la surface est sélectionné à partir du groupe de polymères organiques comprenant des polycarbonates et des polyesters, et ledit décapant est une base.

6. Procédé selon la revendication 5, dans lequel ledit polymère organique provient du groupe de polymères comprenant du polycarbonate de bisphénol -A et du théréphtalate de polyéthylène, et ledit décapant est une solution 6 N de NaOH.

7. Procédé selon la revendication 4, dans lequel lesdites pistes (16) se prolongent dans la surface (14) mais sans la traverser.

8. Procédé pour augmenter la transmission de la lumière dans un corps fait dans un matériau transparent, caractérisé par l'exposition des surfaces parallèles dudit corps à un flux de ions qui introduisent des pistes ioniques (16) dans lesdites surfaces afin de fournir une densité de pistes d'au moins $10^9/cm^2$ où la séparation piste-à-piste (d) est répartie de façon aléatoire par la mise en contact des surfaces avec un décapant qui attaque les pistes pendant un temps suffisant pour développer un ensemble de protubérances (20) ayant une hauteur d'au moins $1/2\lambda_n$, où $\lambda_n$ représente la longueur d'onde maximale de la lumière à transmettre dans le matériau par lesdites surfaces.

**0 029 914**

FIG. 1

FIG. 3

REFLECTANCE

$h_m/\lambda_n$

1

FIG. 2

# FIG. 4

# FIG. 5

% TRANSMISSION CHANGE

WAVELENGTH (nm)

0 029 914